# FASCICULE DE BREVET EUROPEEN

(11) **EP 2 411 118 B1**
(45) Date de publication et mention de la délivrance du brevet: **01.10.2014**
(21) Numéro de dépôt: 10715968.3
(22) Date de dépôt: 23.03.2010
(51) Int. Cl.: B01D 53/00, C10G 5/04, C10G 5/06, C10L 3/10, F25J 3/06

(54) **PROCEDE ET INSTALLATION DE TRAITEMENT D'UN GAZ NATUREL DE CHARGE POUR OBTENIR UN GAZ NATUREL TRAITE ET UNE COUPE D'HYDROCARBURES EN C5+**
VERFAHREN UND VORRICHTUNG ZUR BEHANDLUNG EINES ERDGAS FEEDS ZUR ERZEUGUNG VON BEHANDELTEM ERDGAS UND EINES SCHNITTES MIT C5+ KOHLENWASSERSTOFFEN
PROCESS AND DEVICE FOR THE TREATMENT OF A NATURAL GAS FEED TO OBTAIN TREATED NATURAL GAS AND A FRACTION WITH C5+ HYDROCARBONS

(30) Priorité: 25.03.2009 FR 0951941
(43) Date de publication de la demande: 01.02.2012
(73) Titulaire: Technip France, 92400 Courbevoie (FR)
(72) Inventeur: PARADOWSKI, Henri, F-56330 Pluvigner (FR); VOVARD,Sylvain, F-92400 Courbevoie (FR)
(74) Mandataire: Blot, Philippe Robert Emile
(86) Numéro de dépôt international: PCT/FR2010/050526
(87) Numéro de publication internationale: WO 2010/109130

(56) Documents cités:
- WO-A-02/14242
- WO-A-02/14763
- FR-A- 2 879 729
- US-A1- 2007 130 991

## Description

La présente invention concerne un procédé de traitement d'un gaz naturel de charge séché et décarbonaté pour obtenir un gaz naturel destiné à être liquéfié et une coupe d'hydrocarbures en C₅⁺ selon le préambule de la revendication 1.

Un tel procédé est destiné à être utilisé dans de nouvelles unités de traitement de gaz naturel en amont d'une unité de liquéfaction, ou pour modifier des unités de traitement existantes, afin d'en améliorer la sécurité.

En particulier, ce procédé est adapté à la production de gaz naturel sur des plateformes flottantes de production, de stockage et de déchargement, désignées par l'acronyme anglais « FPSO » (« Floating Production Storage and Off-loading »). Ces FPSO permettent la production de gaz naturel à partir de champs en eaux profondes, notamment situés dans le fond d'étendues d'eau telles que des lacs, des mers ou des océans.

Pour faciliter le transport de gaz naturel extrait d'un gisement, il est connu de le liquéfier pour réduire son volume et permettre son transport par bateau. Avant de procéder à la liquéfaction, le gaz naturel produit doit être traité pour éliminer un certain nombre de composés.

En particulier, la teneur en dioxyde de carbone doit être abaissée à moins de 50 ppm, la teneur en eau doit être la plus basse possible et généralement inférieure à 1 ppm et la teneur en composés soufrés, tels que les mercaptans doit être faible. En particulier, la concentration en sulfure d'hydrogène est généralement fixée à moins de 10 ppm et la concentration en autres composés soufrés doit être inférieure à 30 ppm.

Pour éliminer les composés acides, le dioxyde de carbone, et les mercaptans, un lavage avec un solvant tel qu'une solution aqueuse d'amines est effectué. Pour éliminer l'eau, des tamis moléculaires sont généralement utilisés.

En outre, le gaz naturel extrait contient généralement une faible quantité de composés hydrocarbonés lourds, tels que des hydrocarbures en C₅⁺ comme le benzène.

Ces composés en C₅⁺ doivent être éliminés du gaz naturel avant liquéfaction pour ne pas provoquer de bouchage dans l'échangeur principal de liquéfaction du gaz et dans les équipements situés en aval.

De manière classique, il est connu par exemple de procéder à cette élimination par distillation cryogénique. Une telle distillation comprend généralement des étapes de refroidissement du gaz de charge dans une série d'échangeurs utilisant un réfrigérant au propane et l'alimentation d'une première colonne de fractionnement.

Le procédé comprend ensuite la distillation dans une colonne opérant généralement à une pression supérieure à 40 bars, généralement dénommée par le terme anglais « scrub column ».

Puis, la tête de la colonne est condensée partiellement dans un échangeur utilisant un réfrigérant plus volatil que le propane, avant d'utiliser un procédé en cascade, dans une série de trois colonnes, pour produire un mélange gazeux riche en C₂, du propane, du butane, et une coupe d'hydrocarbures en C₅⁺.

D'autres procédés de traitement sont par exemple décrit dans US 7 010 937, WO 02/14242 ou WO 02/14763.

De tels procédés peuvent être optimisés thermiquement pour obtenir une élimination complète des hydrocarbures en C₅⁺ avec de bons rendements énergétiques.

Toutefois, ces procédés ne donnent pas entière satisfaction, notamment lorsqu'ils doivent être mis en oeuvre dans un espace réduit comme celui d'une plateforme flottante en mer, ou/et dans des environnements dans lesquels les contraintes de sécurités sont élevées, comme par exemple dans les zones urbaines.

A cet égard, l'utilisation de réfrigérants hydrocarbonés, tels que du propane ou du butane et en particulier la présence de stockages pour fournir ces réfrigérants cause un problème de sécurité, compte tenu notamment de leur explosivité.

Un but de l'invention est donc d'obtenir un procédé de traitement d'un gaz naturel de charge pour en éliminer les hydrocarbures en C₅⁺, en vue d'une liquéfaction ultérieure, qui soit particulièrement compact et sûr, afin de permettre notamment sa mise en oeuvre sur une plateforme flottante ou dans des environnements sensibles.

A cet effet, l'invention a pour objet un procédé selon le revendication 1.

Le procédé selon l'invention peut comprendre l'une ou plusieurs des caractéristiques des revendications 2 à 11. Il peut comprendre les caractéristiques suivantes:
- la teneur en hydrocarbures en C₄⁻ dans le courant riche en hydrocarbures en C₅⁺ est inférieure à 10% molaire,
- la teneur en hydrocarbures en C₃⁻ dans le courant riche en hydrocarbures en C₅⁺ inférieure à 1% molaire,
- la pression de vapeur du courant d'hydrocarbures en C₅⁺ est inférieure à 1 bar, avantageusement inférieure ou égale à 0,8 bar, et
- le premier échangeur thermique est un échangeur thermique à deux flux.

L'invention a également pour objet une installation selon la revendication 12.

L'installation selon l'invention peut comprendre l'une ou plusieurs des caractéristiques des revendications 13 à 15. Elle peut comprendre les caractéristiques suivantes:
- le premier échangeur thermique, avantageusement le deuxième échangeur thermique et le troisième échangeur thermique sont de type à faisceau et calandres et sont réalisés en acier.
- la première colonne et la deuxième colonne sont munies de lits de garnissage structurés ;
- le premier ballon séparateur, le deuxième ballon séparateur, et les fonds de la première colonne et de la deuxième colonne sont munis de chicanes pour éviter les mouvements d'oscillations de liquide.

L'invention sera mieux comprise à la lecture de la description qui va suivre, donnée uniquement à titre d'exemple, et faite en se référant aux dessins annexés, sur lesquels :
- la Figure 1 est un schéma synoptique fonctionnel d'une première installation selon l'invention, pour la mise en oeuvre d'un premier procédé selon l'invention ;
- la Figure 2 est une vue analogue à la Figure 1 d'une deuxième installation selon l'invention pour la mise en oeuvre d'un deuxième procédé selon l'invention ;
- la Figure 3 est une vue analogue à ta Figure 1 d'une troisième installation selon l'invention pour la mise en oeuvre d'un troisième procédé selon l'invention.

Dans tout ce qui suit, on désignera par une même référence un courant circulant dans une conduite, et la conduite qu'il transporte.

En outre, sauf indication contraire, les pourcentages cités sont des pourcentages molaires et les pressions sont données en bars absolus.

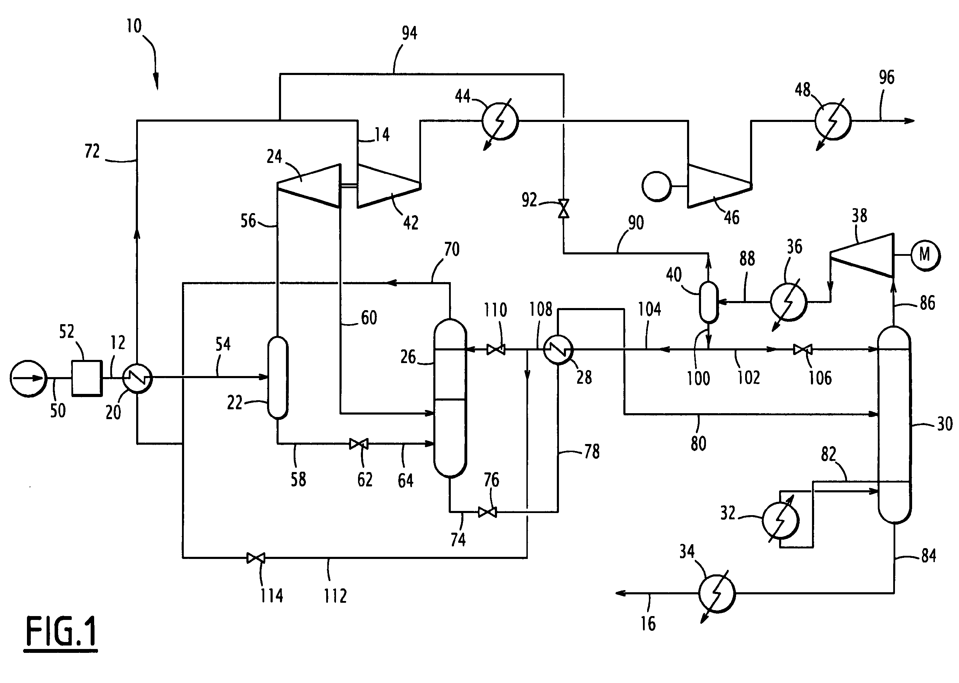

Une première installation de traitement 10 selon l'invention est représentée sur la Figure 1.

Cette installation 10 est destinée à traiter un courant de gaz naturel de charge 12 séché et décarbonaté pour en éliminer les hydrocarbures en C₅⁺. Elle permet de produire un gaz naturel traité 14 destiné à être comprimé, puis liquéfié dans une unité de liquéfaction du gaz naturel (non représentée) située en aval de l'installation et une coupe 16 d'hydrocarbures en C₅⁺.

L'installation 10 comprend, d'amont en aval sur la Figure 1, un premier échangeur thermique 20, un premier ballon séparateur 22, une turbine de détente dynamique 24 et une première colonne 26 de purification.

L'installation 10 comprend en outre, en aval de la colonne de purification 26, un deuxième échangeur thermique 28, une deuxième colonne 30 de récupération des hydrocarbures en C₅⁺ munie d'un échangeur de rebouillage 32.

L'installation 10 comprend, en aval de la colonne de récupération 30, un échangeur thermique de fond 34 et un échangeur thermique de tête 36 monté en aval d'un premier compresseur 38.

L'installation 10 comprend également un deuxième ballon séparateur 40, un deuxième compresseur 42 accouplé à la turbine de détente dynamique 24, un premier échangeur thermique aval 44, un troisième compresseur 46 et un deuxième échangeur thermique aval 48.

Selon l'invention, la première colonne 26 comporte moins de six étages, avantageusement moins de quatre étages théoriques de fractionnement pour simplifier sa structure. Elle comporte avantageusement deux étages théoriques de fractionnement.

Les ballons 22, 40 et les fonds des colonnes 26, 30 sont équipés de chicanes qui permettent d'éviter les mouvements d'oscillation du liquide.

Les colonnes 26 et 30 sont par ailleurs de préférence munies de lits de garnissage structuré. Les lits de garnissage structuré sont par exemple proposés par la société Sulzer sous le nom de Mellapak. Comme on le verra plus bas, et compte tenu des puissances thermiques échangées, le premier échangeur thermique 20 et le deuxième échangeur thermique 28 peuvent être avantageusement réalisés à base d'échangeurs à tube et calandre en acier conforme aux standards de l'association des fabricants d'échangeurs tubulaires (TEMA). Ces échangeurs sont très robustes. L'efficacité de l'échange thermique est améliorée en utilisant des tubes munis d'ailettes basses.

Un premier procédé de traitement selon l'invention va maintenant être décrit.

Dans cet exemple, le rendement de chaque compresseur est de 82% polytropique et le rendement de chaque turbine est de 86% adiabatique.

Le gaz naturel de charge 12 est dans cet exemple un gaz naturel séché et décarbonaté comprenant en moles 5,00% d'azote, 86,60% de méthane, 5,00% d'éthane, 1,50% de propane, 0,50% d'hydrocarbures en i-C₄, 0,50% d'hydrocarbures en n-C₄, 0,20% d'hydrocarbures en i-C₅, 0,20% d'hydrocarbures en n-C₅, 0,20% d'hydrocarbures en n-C₆, 0,10% de benzène et 0,20% d'hydrocarbures en n-C₇.

Il comprend donc plus généralement en moles entre 0% et 15% d'azote, entre 0% et 5% d'hydrocarbures en C₅⁺ à éliminer et entre 80% et 95% d'hydrocarbures en C₄⁻.

Ce gaz séché et décarbonaté 12 est obtenu à partir d'une charge 50, après passage de cette charge 50 dans une unité 52 d'élimination des impuretés. L'unité 52 traite la charge 50 pour réduire la teneur en dioxyde de carbone à moins de 50 ppm, la teneur en sulfure d'hydrogène à moins de 10 ppm, et la teneur dans d'autres composés soufrés, tels que les mercaptans, inférieure à 30 ppm.

A cet effet, l'élimination des composés acides, du dioxyde de carbone, du sulfure d'hydrogène, des mercaptans légers se fait par exemple par lavage avec un solvant tel qu'une solution aqueuse d'amine dans l'unité 52. L'élimination de l'eau est réalisée par exemple grâce à des tamis moléculaires présents dans l'unité 52 et qui peuvent aussi être utilisés pour absorber les mercaptans.

Le gaz naturel de charge 12 présente ainsi une pression supérieure à 45 bars et notamment sensiblement égale à 60 bars. Il contient moins de 50 ppm de dioxyde de carbone et moins d'1 ppm d'eau.

La température du gaz naturel à l'entrée est voisine de la température ambiante et est notamment égale à 35°C.

Dans cet exemple le débit du gaz naturel 12 est de 40 000 kmoles/h.

Le gaz naturel de charge 12 est introduit dans le premier échangeur thermique 20 pour y être refroidi à une température inférieure à 0°C, notamment sensiblement égale à - 20°C pour former un courant de charge 54 pré-refroidie.

Le courant 54 est introduit dans le premier ballon séparateur 22 pour former en tête, un courant gazeux pré-refroidi 56 et éventuellement, en pied, un courant liquide pré-refroidi 58.

Le courant gazeux pré-refroidi 56 est alors introduit dans la turbine 24 pour y être détendu dynamiquement jusqu'à une pression supérieure à 35 bars, avantageusement supérieure à 40 bars, avantageusement encore supérieure à 44 bars et former un courant supérieur 60 d'alimentation de colonne. Dans cet exemple la pression du courant 60 est de 45 bars, ce qui correspond sensiblement à la pression de la colonne 26.

Le courant 60 présente une température inférieure à -25°C et notamment sensiblement égale à -35,4°C. Il est introduit dans la première colonne de fractionnement 26 en dessous de la zone active de fractionnement.

Le courant liquide pré-refroidi 58, lorsqu'il est présent, est détendu à travers une première vanne de détente statique 62 jusqu'à une pression supérieure à 35 bars avantageusement supérieure à 40 bars, avantageusement encore supérieure à 45 bars pour former un courant inférieur 64 d'alimentation de colonne.

La température du courant inférieur 64 d'alimentation de colonne est inférieure à - 20°C et est sensiblement égale à - 23°C.

Le courant inférieur 64 d'alimentation de colonne est introduit dans la première colonne de fractionnement 26 en dessous du courant supérieur 60 d'alimentation de colonne.

Un gaz naturel de tête purifié 70, pauvre en hydrocarbures en C₅⁺, est produit et prélevé en tête de la colonne 26. Ce gaz 70 présente une température inférieure à - 25°C, et notamment égale à -36,3°C.

Ce gaz 70 comprend une teneur en méthane supérieure à 85% et une teneur en hydrocarbures en C₅⁺ inférieure à 0.1%.

Le gaz naturel de tête purifié 70 est ensuite introduit dans le premier échangeur thermique 20, où il est placé en relation d'échange thermique avec le gaz naturel de charge 12. Le gaz purifié 70 refroidit le gaz naturel de charge 12 et est réchauffé jusqu'à une température légèrement inférieure à l'ambiante et notamment sensiblement égale à 30°C, formant ainsi un courant de tête réchauffé 72.

Ainsi, selon l'invention, le gaz naturel de charge 12 est refroidi exclusivement par échange thermique avec le gaz naturel de tête purifié 70, sans qu'il soit nécessaire de fournir des frigories supplémentaires par un cycle de réfrigération externe. Ceci permet de simplifier notablement la structure de l'installation 10 et la mise en oeuvre du procédé.

La colonne 26 produit en fond un gaz liquéfié 74 de fond, riche en hydrocarbures en C₅⁺. Ce gaz liquéfié 74 comprend une teneur en hydrocarbures en C₅⁺ élevée qui correspond à plus de 90 % des hydrocarbures en C₅⁺ présents dans le gaz naturel de charge 12. Cette coupe est en général désignée sous le nom de NGL « Natural Gas Liquid ».

Le gaz liquéfié de fond 74 prélevé dans le fond de la colonne 26 est ensuite détendu dans une deuxième vanne de détente statique 76 jusqu'à une pression inférieure à 25 bars, avantageusement inférieure à 20 bars, avantageusement encore inférieure à 15 bars, pour former un gaz liquéfié de fond détendu 78.

Le gaz liquéfié 78 est ensuite introduit dans le deuxième échangeur thermique 28 pour y être réchauffé jusqu'à une température supérieure à -20°C, avantageusement sensiblement égale à -19°C et donner un gaz liquéfié réchauffé 80.

Le gaz naturel liquéfié réchauffé 80 est alors introduit à un niveau intermédiaire d'alimentation de la deuxième colonne 30.

Un courant de rebouillage 82 est prélevé dans le fond de la deuxième colonne 30 sous le niveau intermédiaire d'alimentation et est réintroduit dans cette colonne 30 après passage dans l'échangeur de rebouillage 32 où il se réchauffe.

Un courant de fond 84 est prélevé au fond de la deuxième colonne 30, puis est introduit dans l'échangeur thermique de fond 34 pour former, après réchauffage jusqu'à la température ambiante la coupe 16 d'hydrocarbures en C₅⁺.

Cette coupe 16 présente un débit qui dépend de la teneur en hydrocarbures en C₅⁺ dans le gaz de charge 12. Dans cet exemple, ce débit est d'environ 29 800 kg/heure. Elle possède une tension de vapeur inférieure à 1 bar, avantageusement inférieure à 0,8 bar et une teneur en hydrocarbures en C₅⁺ supérieure à 89% en mole.

La teneur molaire en hydrocarbures en C₄⁻ dans la coupe 16 est inférieure à 10% et la teneur molaire en hydrocarbures en C₃⁻ dans la coupe 16 est inférieure à 1%.

Un courant gazeux 86 de tête de colonne est extrait de la tête de la colonne 30. Ce courant 86 est comprimé dans le premier compresseur 38 jusqu'à une pression supérieure à 40 bars et notamment égale à 45,7 bars.

Ce courant comprimé est ensuite refroidi dans l'échangeur thermique de tête 36 par échange thermique avec un réfrigérant jusqu'à une température d'environ 35°C pour former un courant de tête comprimé refroidi 88.

Le courant 88 est ensuite introduit dans le deuxième ballon séparateur 40. Le deuxième ballon séparateur 40 produit un flux de tête 90 gazeux qui est amené jusqu'à une troisième vanne de détente statique 92 et forme après passage dans la vanne 92 un flux de tête détendu 94.

La pression du flux de tête détendu 94 est sensiblement égale à la pression de la première colonne de fractionnement 26 et son débit est d'environ de 15760 kg/heure.

Le flux de tête détendu 94 est ensuite injecté dans le courant de tête réchauffé 72 pour former le gaz naturel traité 14.

Le gaz naturel traité 14 est ensuite introduit successivement dans le premier compresseur aval 42, dans le premier échangeur thermique aval 44, dans le deuxième compresseur aval 46, et enfin dans le deuxième échangeur thermique aval 48 afin d'obtenir un gaz traité comprimé 96 destiné à être liquéfié.

Le gaz traité comprimé 96 présente alors une pression supérieure à 60 bars, notamment sensiblement égale à 75 bars et une température sensiblement égale à la température du réfrigérant circulant dans le deuxième échangeur thermique aval 48, soit environ 40 °C.

Le gaz traité comprimé 96 est envoyé à une unité de liquéfaction du gaz naturel (non représentée) pour former, après liquéfaction totale, du gaz naturel liquéfié propre à être transporté.

Un flux de pied liquide 100 est récupéré au pied du deuxième ballon séparateur 40. Ce flux liquide 100 est séparé en une première partie 102 formant reflux de la deuxième colonne 30 et en une deuxième partie 104 formant reflux de la première colonne 26.

Le rapport du débit massique de la première partie 102 au débit massique de la deuxième partie 104 est avantageusement compris entre 30% et 90%.

La première partie 102 est détendue dans une quatrième vanne de détente 106 à une pression inférieure à 25 bars, avantageusement inférieure à 20 bars, avantageusement encore inférieure à 15 bars, pour être introduite comme reflux au voisinage de la tête de la deuxième colonne 30. La température de la deuxième partie 102 après détente dans la vanne 106 est inférieure à 15 °C et notamment égale à 9,7°C.

La deuxième partie 104 est convoyée jusqu'au deuxième échangeur thermique 28 pour y être placée en relation d'échange thermique avec le gaz naturel liquéfié 78 de fond de la colonne de fractionnement 26. La deuxième partie 104 réchauffe le gaz naturel liquéfié de fond 78 et forme une deuxième partie refroidie 108.

La deuxième partie refroidie 108, qui présente une température inférieure à 30°C, et notamment égale à -35°C, est ensuite introduite dans la première colonne 26, après détente dans une cinquième vanne de détente 110 jusqu'à la pression de la première colonne de fractionnement 26.

Un flux secondaire 112 est prélevé dans la deuxième partie de reflux 108, entre son passage dans le deuxième échangeur 28 et son passage dans la cinquième vanne de détente 108. Le rapport du débit massique du flux secondaire 112 au flux total de la deuxième partie de reflux refroidi 108 est inférieur à 10 %.

Le flux secondaire 112 est alors détendu dans une sixième vanne de détente 114 jusqu'à une pression sensiblement égale a la pression de la première colonne de fractionnement 26 pour être mélangé au gaz naturel de tête 70 issu de la première colonne 26 avant son passage dans le premier échangeur 20.

A titre d'illustration, la composition molaire du gaz naturel liquéfié de fond 74, les compositions du flux de tête gazeux 90 et du flux de pied liquide 100, et la composition du gaz traité 14 sont données dans le tableau 1.

**TABLEAU 1**

| Flux (% molaire) | 74 | 90 | 100 | 14 |
|---|---|---|---|---|
| Azote | 0,38 | 0,89 | 0,12 | 5,05 |
| Méthane | 31,34 | 63,28 | 18,41 | 87,40 |
| Ethane | 12,39 | 16,54 | 15,36 | 5,05 |
| Propane | 12,77 | 10,15 | 22,39 | 1,51 |
| i-C4 | 9,07 | 4,45 | 18,28 | 0,50 |
| n-C4 | 11,95 | 4,47 | 23,22 | 0,46 |
| i-C5 | 5,01 | 0,14 | 1,43 | 194 ppm |
| n-C5 | 4,96 | 0,07 | 0,80 | 98 ppm |
| n-C6 | 4,85 | - | 0,01 | 2 ppm |
| Benzène | 2,42 | - | - | 1 ppm |
| n-C7 | 4,85 | - | - | 0 ppm |

Des exemples de température, de pression et de débit massique des différents courants illustrés dans le procédé de la Figure 1 sont résumés dans le tableau 2 ci-dessous.

**TABLEAU 2**

| Courant | Pression (bars) | Températures (°C) | Débit (kg/h) |
|---|---|---|---|
| 12 | 60 | 35 | 751179 |
| 54 | 60 | - 20 | 751179 |
| 60 | 45 | - 35,4 | 708045 |
| 64 | 45 | - 23 | 43134 |
| 70 | 44,8 | - 36,3 | 704487 |
| 14 | 44,3 | 30.2 | 721380 |
| 96 | 75 | 35 | 721380 |
| 80 | 11,5 | - 19 | 73913 |
| 16 | 10.6 | 35 | 29799 |
| 88 | 45,4 | 35 | 57941 |
| 94 | 45.3 | 35 | 15760 |
| 102 | 45,4 | 35 | 13830 |
| 108 | 45,2 | - 35 | 28360 |
| 112 | 45,2 | - 35 | 1140 |

La consommation énergétique du procédé est donnée dans le tableau 3.

**TABLEAU 3**

| | |
|---|---|
| Compresseur 38 | 1,91 MW |
| Compresseur 46 | 13,62 MW |
| Total | 15,53 MW |
| Echangeur 32 | 9,05 MW |

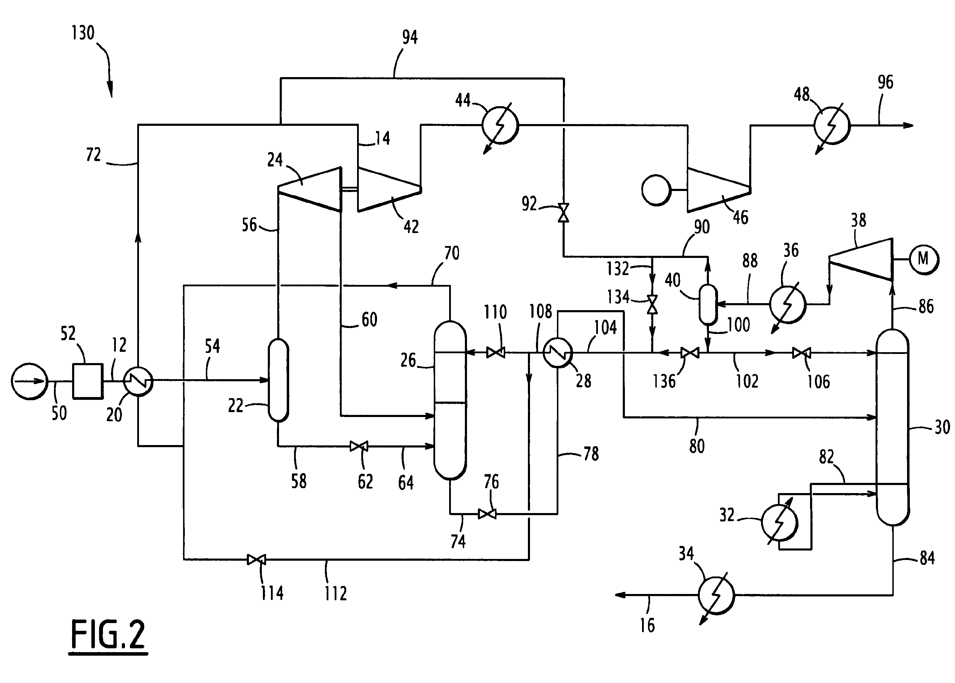

Une deuxième installation 130 selon l'invention est représentée sur la Figure 2. Cette installation 130 est destinée à la mise en oeuvre d'un deuxième procédé selon l'invention.

Le deuxième procédé selon l'invention diffère du premier procédé en ce qu'une fraction de dérivation 132 est prélevée dans le flux de tête gazeux 90.

La fraction de dérivation 132 est introduite, après passage dans une septième vanne de contrôle 134, dans la deuxième partie 104, en aval d'une huitième vanne de contrôle 136, et en amont du deuxième échangeur 28.

Le rapport du débit massique de la fraction de dérivation 132 au débit total du flux de tête gazeux 90 issu du deuxième ballon séparateur 40 est inférieur à 10%.

A titre d'illustration, la composition molaire du gaz naturel liquéfié de fond 74, les compositions du flux de tête gazeux 90 et du flux de pied liquide 100, et la composition du gaz traité 14 sont données dans le tableau 4.

**TABLEAU 4**

| Flux (% molaire) | 74 | 90 | 100 | 14 |
|---|---|---|---|---|
| Azote | 0,43 | 0,97 | 0,14 | 5,05 |
| Méthane | 32,58 | 64,23 | 19,46 | 87,40 |
| Ethane | 12,36 | 16,06 | 15,28 | 5,05 |
| Propane | 12,59 | 9,76 | 21,82 | 1,51 |
| i-C4 | 8,99 | 4,34 | 17,87 | 0,50 |
| n-C4 | 11,92 | 4,40 | 22,90 | 0,46 |
| i-C5 | 4,85 | 0,16 | 1,60 | 204 ppm |
| n-C5 | 4,77 | 0,08 | 0,93 | 104 ppm |
| n-C6 | 4,60 | - | 0,01 | 2 ppm |
| Benzène | 2,30 | - | - | 1 ppm |
| n-C7 | 4,60 | - | - | 0 ppm |

Des exemples de température, de pression et de débit massique des différents courants illustrés dans le procédé de la Figure 2 sont résumés dans le tableau 5 ci-dessous.

**TABLEAU 5**

| Courant | Pression (bars) | Température (°C) | Débit (kg/h) |
|---|---|---|---|
| 12 | 60 | 35 | 751179 |
| 54 | 60 | -21 | 751179 |
| 60 | 47 | - 34,1 | 706827 |
| 64 | 47 | - 23,6 | 44352 |
| 70 | 46,8 | -35,4 | 708442 |
| 14 | 46,3 | 31.3 | 721430 |
| 96 | 75 | 36 | 721430 |
| 80 | 11,5 | - 10,6 | 76608 |
| 16 | 10.6 | 35 | 29750 |
| 88 | 47,4 | 35 | 60585 |
| 94 | 47.3 | 35 | 11690 |
| 102 | 47.4 | 35 | 13730 |
| 108 | 47,2 | - 35 | 35165 |
| 112 | 47.2 | -35 | 1290 |
| 132 | 47.4 | 35 | 4990 |

La consommation énergétique du procédé est donnée dans le tableau 6 ci-après.

**TABLEAU 6**

| | |
|---|---|
| Compresseur 38 | 2,09 MW |
| Compresseur 46 | 12,75 MW |
| Total | 14,84 MW |
| Echangeur 32 | 8,7 MW |

La composition du reflux 104 de la première colonne 26, enrichie en gaz légers par l'apport de la fraction de dérivation 132, conduit à une vaporisation de ces gaz en tête de colonne 26, ce qui abaisse la température de la tête de cette colonne 26. Ainsi, la température de tête de colonne est inférieure à la température du courant supérieur 60.

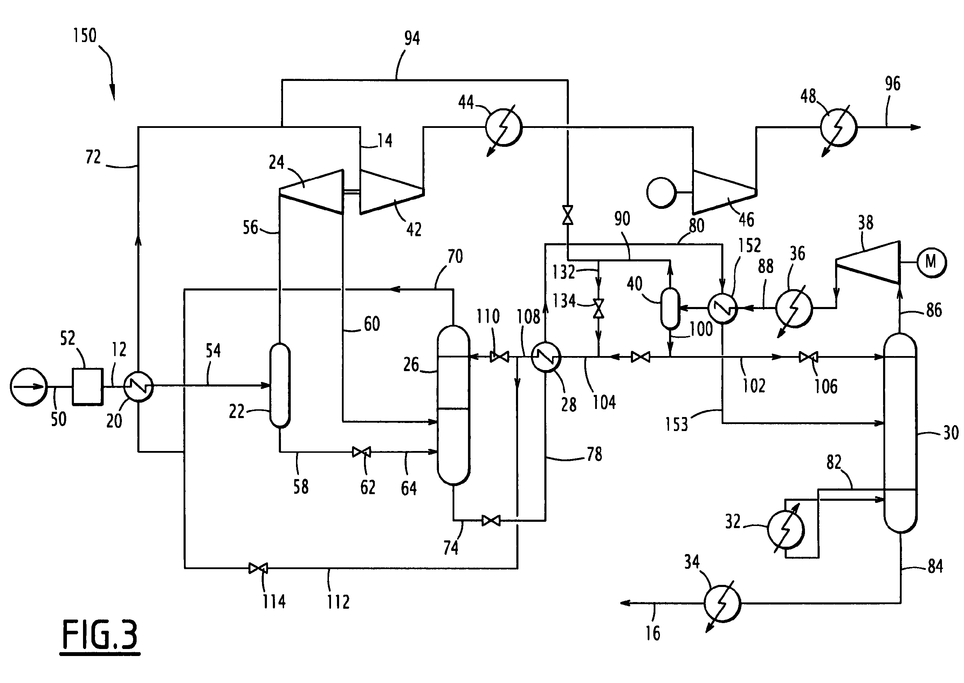

Une troisième installation 150 selon l'invention est représentée sur la Figure 3. La troisième installation 150 est destinée à la mise en oeuvre d'un troisième procédé selon l'invention.

A la différence de la deuxième installation 130, la troisième installation 150 comprend un troisième échangeur thermique 152 disposé en aval du deuxième échangeur thermique 28.

Le troisième procédé selon l'invention diffère du deuxième procédé selon l'invention en ce que le gaz naturel liquéfié réchauffé 80 est introduit dans le troisième échangeur 152 en aval du deuxième échangeur 28 pour y être réchauffé avant son introduction dans la deuxième colonne de récupération 30.

La température du gaz naturel liquéfié 153 issu du troisième échangeur 152 est ainsi supérieure à 15°C, et notamment égale à 10°C.

Le courant de tête comprimé 88 est introduit également dans le troisième échangeur thermique 152, pour y être refroidi par échange thermique avec le gaz naturel liquéfié 80 jusqu'à une température inférieure à 0°C, et notamment égale à - 3,4 °C.

Le fonctionnement du troisième procédé est par ailleurs identique à celui du deuxième procédé.

A titre d'illustration, la composition molaire du gaz naturel liquéfié de fond 74, les compositions du flux de tête gazeux 90 et du flux de pied liquide 100, et la composition du gaz traité 14 sont données dans le tableau 7.

**TABLEAU 7**

| Flux (% molaire) | 74 | 90 | 100 | 14 |
|---|---|---|---|---|
| Azote | 0,44 | 1,59 | 0,21 | 5,05 |
| Méthane | 33,00 | 80,54 | 28,19 | 87,40 |
| Ethane | 12,27 | 10,91 | 17,11 | 5,05 |
| Propane | 12,49 | 4,19 | 19,84 | 1,51 |
| i-C4 | 9,01 | 1,43 | 14,71 | 0,50 |
| n-C4 | 11,98 | 1,30 | 18,35 | 0,46 |
| i-C5 | 4,75 | 0,03 | 1,06 | 192 ppm |
| n-C5 | 4,66 | 0,01 | 0,53 | 93 ppm |
| n-C6 | 4,55 | - | - | 2 ppm |
| Benzène | 2,28 | - | - | 1 ppm |
| n-C7 | 4,56 | - | - | 0 ppm |

Des exemples de température, de pression et de débit massique des différents courants illustrés dans le procédé de la Figure 3 sont résumés dans le tableau 8 ci-dessous.

**TABLEAU 8**

| Courant | Pression (bars) | Température (°C) | Débit (kg/h) |
|---|---|---|---|
| 12 | 60 | 35 | 751179 |
| 54 | 60 | -21 | 751179 |
| 60 | 48 | - 33 | 706827 |
| 64 | 48 | - 23,4 | 44352 |
| 70 | 47,8 | - 34,8 | 713145 |
| 14 | 47,5 | 30.3 | 721360 |
| 96 | 74,5 | 35 | 721360 |
| 80 | 11.5 | -25 | 77047 |
| 16 | 10.6 | 35 | 29820 |
| 88 | 48,7 | - 3,4 | 62766 |
| 94 | 48 | -3.4 | 4200 |
| 102 | 48.1 | -3.4 | 15540 |
| 108 | 47,9 | -34,2 | 43026 |
| 112 | 47.9 | -34.2 | 4010 |
| 132 | 48.1 | -3.4 | 3020 |
| 153 | 11,5 | 10 | 77047 |

La consommation énergétique du procédé est donnée dans le tableau 9 ci-après.

**TABLEAU 9**

| | |
|---|---|
| Compresseur 38 | 2,24 MW |
| Compresseur 46 | 12,29 MW |
| Total | 14,53 MW |
| Echangeur 32 | 7,7 MW |

Grâce à l'invention qui vient d'être décrite, il est possible de produire un gaz traité 14 qui peut être liquéfié, avec un nombre d'équipements très faibles et avec un rendement amélioré.

Ainsi, les installations 10, 130, 150 selon l'invention, décrites ci-dessus, sont par exemple disposées à terre ou avantageusement sur une structure flottante ou sur une structure fixée à la surface d'eau, telle qu'une plateforme ou une unité flottante de récupération, de stockage et de traitement des hydrocarbures, désignées par l'acronyme anglais « FPSO ».

Les frigories nécessaires à la mise en oeuvre du procédé sont obtenues exclusivement par la détente dynamique du courant 56 dans la turbine 24 et par l'échange thermique entre le gaz de tête purifié 70 et le gaz naturel de charge 12.

L'absence de cycles de réfrigération extérieurs permet de disposer d'un inventaire de liquide relativement faible, limité aux fonds des ballons 22, 44 et des colonnes 26, 30.

En outre, la colonne de purification 26 présente peu d'étages de fractionnement, et un garnissage structuré. Il est donc facile de la mettre en oeuvre sur une plateforme flottante.

L'installation est en outre dépourvue de pompes et met en oeuvre des échangeurs simples de fluides pouvant être à tube et calandre en acier.

La réfrigération du procédé, fournie sensiblement exclusivement par la turbine de détente 24 sans apport de froid externe, permet de démarrer le procédé plus rapidement et progressivement.

En outre, durant la phase de démarrage, le gaz traité 14 peut être recyclé vers le gaz de charge pour limiter ou éviter la mise à la torche.

Le procédé est en outre très flexible puisqu'il permet d'obtenir un gaz traité 14 dont la teneur en benzène est sensiblement égale à 1 ppm et dont la teneur en C₅⁺ est inférieure à 0,1 % molaire à base de gaz de charge présentant des teneurs en C₄⁺ très variables comme illustré dans le tableau 10 ci-dessous.

**TABLEAU 10**

| Gaz | | 1 | 2 | 3 | 4 | 5 |
|---|---|---|---|---|---|---|
| Teneur en C₄⁺ du gaz de charge 12 | % mole | 3,4 | 3,28 | 1,9 | 1,44 | 0,78 |
| Température de pré-refroidissement du gaz de charge dans l'échangeur 20 | °C | -2,1 | -20,4 | -36,1 | -44 | -57 |
| Pression de la colonne 26 | bar | 46,8 | 49,8 | 49,8 | 49,8 | 48,8 |
| Puissance de la turbine 24 | kW | 3452 | 2576 | 2271 | 1988 | 1924 |
| Débit de coupe C₅⁺ produite | Kg/h | 29750 | 14019 | 7892 | 862 | 5553 |

On notera que les échangeurs de chaleur 20, 28 et 152 sont des échangeurs à deux flux.

Ainsi, l'échangeur de chaleur 28 est propre à mettre en relation d'échange thermique le gaz liquéfié 78 exclusivement avec la deuxième partie 104 formant reflux de la première colonne 26.

L'échangeur de chaleur 20 est propre à mettre en relation d'échange thermique le courant de gaz 12 exclusivement avec le gaz naturel purifié 70.

L'échangeur de chaleur 152 est propre à mettre en relation d'échange thermique le gaz naturel liquéfié réchauffé 80 exclusivement avec le courant de tête comprimé refroidi 88.

## Revendications

1. Procédé de traitement d'un gaz naturel de charge (12) séché et décarbonaté pour obtenir un gaz naturel traité (14) destiné à être liquéfié et une coupe (16) d'hydrocarbures en C₅⁺, le procédé comprenant les étapes suivantes :
- refroidissement du gaz naturel de charge (12) dans un premier échangeur thermique (20) pour former un courant de charge pré-refroidie (54) ;
- introduction du courant de charge pré-refroidie (54) dans un premier ballon séparateur (22) pour former un courant gazeux (56) pré-refroidi et éventuellement un courant liquide (58) pré-refroidi ;
- détente dynamique du courant gazeux pré-refroidi (56) dans une turbine de détente (24) et introduction du courant détendu (60) issu de la turbine de détente (24) dans une première colonne (26) de purification ;
- éventuellement détente du courant liquide pré-refroidi (58) et introduction dans la première colonne (26) ;
- production en tête de la première colonne (26) d'un gaz naturel de tête purifié (70);
- récupération au fond de la première colonne (26) d'un gaz naturel liquéfié (74) de fond ;
- introduction du gaz naturel liquéfié de fond (74) dans une deuxième colonne d'élimination des hydrocarbures en C₅⁺ ;
- production, au fond de la deuxième colonne (30) d'une coupe (16) d'hydrocarbures ;
- production, en tête de la deuxième colonne (30) d'un courant gazeux (86) de tête de colonne et introduction du courant gazeux (86) de tête de colonne dans un deuxième ballon séparateur (40) pour former un flux liquide (100) de pied et un flux gazeux (90) de tête ;
- introduction d'une première partie (102) du flux liquide de pied (100) en reflux dans la deuxième colonne (30) et introduction d'une deuxième partie (104) du flux liquide de pied (100) en reflux dans la première colonne (26) ;
- Injection d'au moins une partie du flux gazeux de tête (90) issu du deuxième ballon séparateur (40) dans le gaz naturel de tête purifié (70) pour former le gaz naturel traité (14),
le procédé comprenant les étapes suivantes :
• réchauffement du gaz naturel de tête purifié (70) issu de la première colonne (26) dans le premier échangeur thermique (20) par échange thermique avec le gaz naturel de charge (12) ;
• détente du gaz naturel liquéfié de fond (74) issu de la première colonne avant son introduction dans la deuxième colonne (30) ;
• compression du courant gazeux (86) de tête de colonne dans un premier compresseur (38) et refroidissement avant son introduction dans le deuxième ballon séparateur (40) ;
**caractérisé en ce que** la coupe d'hydrocarbures (16) est une coupe d'hydrocarbures en C₅⁺, **en ce que** lors de l'étape de détente dynamique, le courant gazeux pré-refroidi (56) est détendu jusqu'à une pression supérieure à 35 bars, avantageusement supérieure à 40 bars, avantageusement encore supérieure à 44 bars, et
**en ce que** la pression régnant dans la deuxième colonne (30) est inférieure à 25 bars, avantageusement inférieure à 20 bars, avantageusement encore inférieure à 15 bars, et **en ce qu'**il comprend la mise en relation d'échange thermique dans un deuxième échangeur thermique (28) de la deuxième partie (104) du flux liquide de pied (100) avec le gaz naturel liquéfié de fond (74) issu de la première colonne (26).

2. Procédé selon l'une quelconque des revendications précédentes, **caractérisé en ce que** la température du courant gazeux pré-refroidi (56), après passage dans la turbine de détente (24), est supérieure à la température de prélèvement du gaz naturel de tête purifié (70) en tête de la première colonne (26).

3. Procédé selon l'une quelconque des revendications précédentes, **caractérisé en ce**
**que** le deuxième échangeur thermique est un échangeur thermique à deux flux.

4. Procédé selon l'une quelconque des revendications précédentes, **caractérisé en ce qu'**il comprend le prélèvement d'une fraction (132) du flux gazeux de tête (90) issu du deuxième ballon séparateur (40) et l'introduction de la fraction prélevée (132) dans la deuxième partie (104) du flux liquide de fond (100) issu du deuxième ballon séparateur (40).

5. Procédé selon l'une quelconque des revendications précédentes, **caractérisé en ce que** le courant gazeux (86) de tête de colonne issu de la deuxième colonne (30) est mis en relation d'échange thermique, après sa compression dans le premier compresseur (38), avec le gaz naturel liquéfié (74) de fond issu de la première colonne (26) dans un troisième échangeur thermique (52), le troisième échangeur thermique étant avantageusement un échangeur thermique à deux flux.

6. Procédé selon l'une quelconque des revendications précédentes, **caractérisé en ce qu'**il comprend une étape de prélèvement d'un flux secondaire (112) dans la deuxième partie (104) du flux liquide de pied (100), avant son introduction dans la première colonne (26), et l'introduction du flux secondaire (112) dans le courant de gaz naturel de tête purifié issu de la première colonne (26).

7. Procédé selon l'une quelconque des revendications précédentes, **caractérisé en ce que** la totalité du courant gazeux pré-refroidi (56) issu du premier ballon séparateur (22) est introduite dans la turbine de détente dynamique (24).

8. Procédé selon l'une quelconque des revendications précédentes, **caractérisé en ce que** le nombre de plateaux théoriques de la première colonne (26) est inférieur à 4.

9. Procédé selon l'une quelconque des revendications précédentes, **caractérisé en ce que** le gaz naturel de charge (12) est refroidi exclusivement par échange thermique avec le gaz naturel de tête purifié (70) issu de la première colonne (26) sans apport de frigories d'un cycle de réfrigération extérieur.

10. Procédé selon l'une quelconque des revendications précédentes, **caractérisé en ce que** la pression de vapeur du courant d'hydrocarbures en C₅⁺ est inférieure à 1 bar, avantageusement inférieure ou égale à 0,8 bar.

11. Procédé selon l'une quelconque des revendications précédentes, **caractérisé en ce que** le premier échangeur thermique (20) est un échangeur thermique à deux flux.

12. Installation (10 ; 130 ; 150) de traitement d'un gaz naturel de charge (12) séché et décarbonaté pour obtenir un gaz naturel traité (14) destiné à être liquéfié et une coupe d'hydrocarbures en C₅⁺, l'installation étant du type comprenant :
- des moyens de refroidissement du gaz naturel de charge (12) pour former un courant de charge pré-refroidie (54) comprenant un premier échangeur thermique (20) ;
- un premier ballon séparateur (22) pour former un courant gazeux pré-refroidi (56) et éventuellement un courant liquide (58) pré-refroidi ;
- des moyens d'introduction du courant de charge pré-refroidie (54) dans le premier ballon séparateur (22) ;
- une turbine de détente dynamique du courant gazeux pré-refroidi (56) ;
- une première colonne (26) de purification ;
- des moyens d'introduction du courant détendu (60) issu de la turbine de détente (24) dans la première colonne (26) ;
- éventuellement des moyens de détente et d'introduction dans la première colonne (24) du courant liquide pré-refroidi (58) ;
- des moyens de récupération en tête de la première colonne (26) d'un gaz naturel de tête purifié (70) ;
- des moyens de récupération au fond de la première colonne (26) d'un gaz naturel liquéfié (74) de fond;
- une deuxième colonne (30) d'élimination des hydrocarbures en C₅⁺;
- des moyens d'introduction du gaz naturel liquéfié de fond (74) dans la deuxième colonne (30) ;
- des moyens de récupération au fond de la deuxième colonne (30) d'une coupe (16) d'hydrocarbures ;
- des moyens de récupération en tête de la deuxième colonne (30) d'un courant gazeux (86) de tête de colonne ;
- un deuxième ballon séparateur (40) ;
- des moyens d'introduction du courant gazeux de tête de colonne (86) dans le deuxième ballon séparateur (40) pour former un flux liquide de pied (100) et un flux gazeux de tête (90) ;
- des moyens d'introduction d'une première partie (102) du flux liquide de pied (100) en reflux dans la deuxième colonne (30) et des moyens d'introduction d'une deuxième partie (104) du flux liquide de pied (100) en reflux dans la première colonne (26) ;
- des moyens d'injection d'au moins une partie du flux gazeux de tête (90) issu du deuxième ballon séparateur (40) dans le gaz naturel de tête purifié (70) pour former le courant de gaz naturel traité (14),
l'installation comprenant :
• des moyens d'introduction du gaz naturel de tête purifié (70) issu de la première colonne (26) dans le premier échangeur thermique (20) pour réchauffer le gaz naturel de tête purifié issu de la première colonne (26) dans le premier échangeur thermique (20) par échange thermique avec le gaz naturel de charge (12) ;
• des moyens (76) de détente du gaz naturel liquéfié de fond (74) issu de la première colonne (26) avant son introduction dans la deuxième colonne (30) ;
• des moyens de compression du courant gazeux (86) de tête de colonne avant son introduction dans le deuxième ballon séparateur (40) comprenant un premier compresseur (38) ;
**caractérisée en ce que** la coupe d'hydrocarbures est une coupe d'hydrocarbures en C₅⁺, **en ce que** la turbine de détente dynamique (56) est propre à détendre le courant gazeux pré-refroidi (56) jusqu'à une pression supérieure à 35 bars, avantageusement supérieure à 40 bars, avantageusement encore supérieure à 44 bars et **en ce que**, la pression régnant dans la deuxième colonne (30) est inférieure à 25 bars, avantageusement inférieure à 20 bars, avantageusement encore inférieure à 15 bars, et **en ce qu'**elle comprend un deuxième échangeur thermique (28) propre mettre en relation d'échange thermique le gaz naturel liquéfié de fond (74) issu de la première colonne avec la deuxième partie (104) du flux liquide de fond (100) issu du deuxième ballon séparateur (40).

13. Installation (10 ; 130 ; 150) selon la revendication 12, **caractérisée en ce que** le deuxième échangeur thermique est un échangeur thermique à deux flux.

14. Instillation (130 ; 150) selon l'une des revendications 12 ou 13, **caractérisée en ce qu'**elle comprend des moyens de prélèvement d'au moins une partie du flux gazeux de tête (90) issu du deuxième ballon séparateur (40) pour l'introduire en mélange dans la deuxième partie (104) du flux liquide de pied (90) issu du deuxième ballon séparateur (40).

15. Installation (150) selon l'une quelconque des revendications 12 à 14, **caractérisée en ce qu'**elle comprend un troisième échangeur thermique (152) propre à placer en relation d'échange thermique le courant gazeux de tête comprimé (88) issu de la deuxième colonne (30) et le gaz naturel liquéfié de fond (74) issu de la première colonne (26), le troisième échangeur thermique étant avantageusement un échangeur thermique à deux flux.

## Patentansprüche

1. Verfahren zur Behandlung eines getrockneten und entkarbonisierten natürlichen Ladegases (12) zur Herstellung eines behandelten natürlichen Gases (14), das dafür bestimmt ist, verflüssigt zu werden, und eines C₅⁺-Kohlenwasserstoffschnittes (16), wobei das Verfahren die folgenden Schritte umfasst:
- Abkühlen des natürlichen Ladegases (12) in einem ersten Wärmetauscher (20), um einen vorgekühlten Ladestrom (54) zu bilden;
- Einspeisen des vorgekühlten Ladestroms (54) in ein erstes Abscheidegefäß (22), um einen vorgekühlten gasförmigen Strom (56) und gegebenenfalls einen vorgekühlten flüssigen Strom (58) zu bilden;
- dynamisches Entspannen des vorgekühlten gasförmigen Stroms (56) in einer Entspannungsturbine (24) und Einspeisen des entspannten Stroms (60), der aus der Entspannungsturbine (24) kommt, in eine erste Reinigungskolonne (26);
- gegebenenfalls Entspannen des vorgekühlten flüssigen Stroms (58) und Einführen in die erste Kolonne (26);
- Erzeugen im Kopf der ersten Kolonne (26) eines gereinigten natürlichen Kopfgases (70);
- Rückgewinnen am Boden der ersten Kolonne (26) eines verflüssigten natürlichen Bodengases (74);
- Einspeisen des verflüssigten natürlichen Bodengases (74) in eine zweite Kolonne zum Entfernen der C₅⁺-Kohlenwasserstoffe;
- Erzeugen, am Boden der zweiten Kolonne (30), eines Kohlenwasserstoffschnittes (16);
- Erzeugen, im Kopf der zweiten Kolonne (30), eines gasförmigen Kolonnenkopfstroms (86) und Einspeisen des gasförmigen Kolonnenkopfstroms (86) in ein zweites Abscheidegefäß (40), um einen flüssigen Bodenfluss (100) und einen gasförmigen Kopffluss (90) zu bilden;
- Einspeisen eines ersten Teils (102) des flüssigen Bodenflusses (100) als Rückfluss in die zweite Kolonne (30) und Einspeisen eines zweiten Teils (104) des flüssigen Bodenflusses (100) als Rückfluss in die erste Kolonne (26);
- Einblasen mindestens eines Teils des gasförmigen Kopfflusses (90), der aus dem zweiten Abscheidegefäß (40) kommt, in das gereinigte natürliche Kopfgas (70), um das behandelte natürliche Gas (14) zu bilden;
wobei das Verfahren die folgenden Schritte umfasst:
• Erwärmen des gereinigten natürlichen Kopfgases (70), das aus der ersten Kolonne (26) kommt, in dem ersten Wärmetauscher (20) durch Wärmeaustausch mit dem natürlichen Ladegas (12);
• Entspannen des verflüssigten natürlichen Bodengases (74), das aus der ersten Kolonne kommt, vor seinem Einspeisen in die zweite Kolonne (30);
• Verdichten des gasförmigen Kolonnenkopfstroms (86) in einem ersten Verdichter (38) und Abkühlen vor seinem Einspeisen in das zweite Abscheidegefäß (40);
**dadurch gekennzeichnet, dass** der Kohlenwasserstoffschnitt (16) ein C₅⁺-Kohlenwasserstoffschnitt ist,
dass bei dem Schritt des dynamischen Entspannens der vorgekühlte gasförmige Strom (56) bis zu einem Druck, der größer als 35 bar, vorteilhafterweise größer als 40 bar, noch weiter vorteilhafterweise größer als 44 bar ist, entspannt wird, und
dass der Druck, der in der zweiten Kolonne (30) herrscht, kleiner als 25 bar, vorteilhafterweise kleiner als 20 bar, noch weiter vorteilhafterweise kleiner als 15 bar ist,
und dass es das In-eine-wärmeaustauschende-Beziehung-Bringen des zweiten Teils (104) des flüssigen Bodenflusses (100) mit dem verflüssigten natürlichen Bodengas (74), das aus der ersten Kolonne (26) kommt, in einem zweiten Wärmetauscher (28) umfasst.

2. Verfahren nach einem der vorhergehenden Ansprüche, **dadurch gekennzeichnet, dass** die Temperatur des vorgekühlten gasförmigen Stroms (56) nach Übergang in die Entspannungsturbine (24) höher als die Entnahmetemperatur des gereinigten natürlichen Kopfgases (70) im Kopf der ersten Kolonne (26) ist.

3. Verfahren nach einem der vorhergehenden Ansprüche, **dadurch gekennzeichnet, dass** der zweite Wärmetauscher ein Zweifluss-Wärmetauscher ist.

4. Verfahren nach einem der vorhergehenden Ansprüche, **dadurch gekennzeichnet, dass** es das Entnehmen einer Fraktion (132) des gasförmigen Kopfflusses (90), der aus dem zweiten Abscheidegefäß (40) kommt, und das Einspeisen der entnommenen Fraktion (132) in den zweiten Teil (104) des flüssigen Bodenflusses (100), der aus dem zweiten Abscheidegefäß (40) kommt, umfasst.

5. Verfahren nach einem der vorhergehenden Ansprüche, **dadurch gekennzeichnet, dass** der gasförmige Kolonnenkopfstrom (86), der aus der zweiten Kolonne (30) kommt, nach seinem Verdichten in dem ersten Verdichter (38), in einem dritten Wärmetauscher (52) in eine wärmeaustauschende Beziehung mit dem verflüssigten natürlichen Bodengas (74), das aus der ersten Kolonne (26) kommt, gebracht wird, wobei der dritte Wärmetauscher vorteilhafterweise ein Zweifluss-Wärmetauscher ist.

6. Verfahren nach einem der vorhergehenden Ansprüche, **dadurch gekennzeichnet, dass** es einen Schritt des Entnehmens eines Sekundärflusses (112) aus dem zweiten Teil (104) des flüssigen Bodenflusses (100), vor seinem Einspeisen in die erste Kolonne (26), und das Einspeisen des Sekundärflusses (112) in den gereinigten natürlichen Kopfgasstrom, der aus der ersten Kolonne (26) kommt, umfasst.

7. Verfahren nach einem der vorhergehenden Ansprüche, **dadurch gekennzeichnet, dass** der gesamte vorgekühlte gasförmige Strom (56), der aus dem ersten Abscheidegefäß (22) kommt, in die Turbine zum dynamischen Entspannen (24) eingespeist wird.

8. Verfahren nach einem der vorhergehenden Ansprüche, **dadurch gekennzeichnet, dass** die Anzahl von theoretischen Böden der ersten Kolonne (26) kleiner als 4 ist.

9. Verfahren nach einem der vorhergehenden Ansprüche, **dadurch gekennzeichnet, dass** das natürliche Ladegas (12) ausschließlich durch Wärmeaustausch mit dem gereinigten natürlichen Kopfgas (70), das aus der ersten Kolonne (26) kommt, ohne Zusatz von Frigorien eines externen Abkühlungszyklus abgekühlt wird.

10. Verfahren nach einem der vorhergehenden Ansprüche, **dadurch gekennzeichnet, dass** der Dampfdruck des C₅⁺-Kohlenwasserstoffstroms kleiner als 1 bar, vorteilhafterweise kleiner oder gleich 0,8 bar ist.

11. Verfahren nach einem der vorhergehenden Ansprüche, **dadurch gekennzeichnet, dass** der erste Wärmetauscher (20) ein Zweifluss-Wärmetauscher ist.

12. Anlage (10; 130; 150) zur Behandlung eines getrockneten und entkarbonisierten natürlichen Ladegases (12) zur Herstellung eines behandelten natürlichen Gases (14), das dafür bestimmt ist, verflüssigt zu werden, und eines C₅⁺-Kohlenwasserstoffschnittes, wobei die Anlage des Typs ist, der Folgendes umfasst:
- Mittel zum Abkühlen des natürlichen Ladegases (12), um einen vorgekühlten Ladestrom (54) zu bilden, die einen ersten Wärmetauscher (20) umfassen;
- ein erstes Abscheidegefäß (22), um einen vorgekühlten gasförmigen Strom (56) und gegebenenfalls einen vorgekühlten flüssigen Strom (58) zu bilden;
- Mittel zum Einspeisen des vorgekühlten Ladestroms (54) in das erste Abscheidegefäß (22);
- eine Turbine zum dynamischen Entspannen des vorgekühlten gasförmigen Stroms (56);
- eine erste Reinigungskolonne (26);
- Mittel zum Einspeisen des entspannten Stroms (60), der aus der Entspannungsturbine (24) kommt, in die erste Kolonne (26);
- gegebenenfalls Mittel zum Entspannen und Einspeisen des vorgekühlten flüssigen Stroms (58) in die erste Kolonne (24);
- Mittel zum Rückgewinnen im Kopf der ersten Kolonne (26) eines gereinigten natürlichen Kopfgases (70);
- Mittel zum Rückgewinnen am Boden der ersten Kolonne (26) eines verflüssigten natürlichen Bodengases (74);
- eine zweite Kolonne (30) zum Entfernen der C₅⁺-Kohlenwasserstoffe;
- Mittel zum Einspeisen des verflüssigten natürlichen Bodengases (74) in die zweite Kolonne (30);
- Mittel zum Rückgewinnen am Boden der zweiten Kolonne (30) eines Kohlenwasserstoffschnittes (16);
- Mittel zum Rückgewinnen im Kopf der zweiten Kolonne (30) eines gasförmigen Kolonnenkopfstroms (86);
- ein zweites Abscheidegefäß (40);
- Mittel zum Einspeisen des gasförmigen Kolonnenkopfstroms (86) in das zweite Abscheidegefäß (40), um einen flüssigen Bodenfluss (100) und einen gasförmigen Kopffluss (90) zu bilden;
- Mittel zum Einspeisen eines ersten Teils (102) des flüssigen Bodenflusses (100) als Rückfluss in die zweite Kolonne (30) und Mittel zum Einspeisen eines zweiten Teils (104) des flüssigen Bodenflusses (100) als Rückfluss in die erste Kolonne (26);
- Mittel zum Einblasen mindestens eines Teils des gasförmigen Kopfflusses (90), der aus dem zweiten Abscheidegefäß (40) kommt, in das gereinigte natürliche Kopfgas (70), um den behandelten natürlichen Gasstrom (14) zu bilden;
wobei die Anlage Folgendes umfasst:
• Mittel zum Einspeisen des gereinigten natürlichen Kopfgases (70), das aus der ersten Kolonne (26) kommt, in den ersten Wärmetauscher (20), um das gereinigte natürliche Kopfgas (70), das aus der ersten Kolonne (26) kommt, in dem ersten Wärmetauscher (20) durch Wärmeaustausch mit dem natürlichen Ladegas (12) zu erwärmen;
• Mittel zum Entspannen (76) des verflüssigten natürlichen Bodengases (74), das aus der ersten Kolonne (26) kommt, vor seinem Einspeisen in die zweite Kolonne (30);
• Mittel zum Verdichten des gasförmigen Kolonnenkopfstroms (86) vor seinem Einspeisen in das zweite Abscheidegefäß (40), die einen ersten Verdichter (38) umfassen;
**dadurch gekennzeichnet, dass** der Kohlenwasserstoffschnitt (16) ein C₅⁺-Kohlenwasserstoffschnitt ist,
dass die Turbine zum dynamischen Entspannen (24) imstande ist, den vorgekühlten gasförmigen Strom (56) bis zu einem Druck, der größer als 35 bar, vorteilhafterweise größer als 40 bar, noch weiter vorteilhafterweise größer als 44 bar ist, zu entspannen, und dass der Druck, der in der zweiten Kolonne (30) herrscht, kleiner als 25 bar, vorteilhafterweise kleiner als 20 bar, noch weiter vorteilhafterweise kleiner als 15 bar ist,
und dass sie einen zweiten Wärmetauscher (28) umfasst, der imstande ist, das verflüssigte natürliche Bodengas (74), das aus der ersten Kolonne kommt, mit dem zweiten Teil (104) des verflüssigten natürlichen Bodengases (100), das aus dem zweiten Abscheidegefäß (40) kommt, in eine wärmeaustauschende Beziehung zu bringen.

13. Anlage (10; 130; 150) nach Anspruch 12, **dadurch gekennzeichnet, dass** der zweite Wärmetauscher ein Zweifluss-Wärmetauscher ist.

14. Anlage (130; 150) nach einem der Ansprüche 12 oder 13, **dadurch gekennzeichnet, dass** sie Mittel zum Entnehmen mindestens eines Teils des gasförmigen Kopfflusses (90), der aus dem zweiten Abscheidegefäß (40) kommt, umfasst, um ihn als Gemisch in den zweiten Teil (104) des flüssigen Bodenflusses (90), der aus dem zweiten Abscheidegefäß (40) kommt, einzuspeisen.

15. Anlage (150) nach einem der Ansprüche 12 bis 14, **dadurch gekennzeichnet, dass** sie einen dritten Wärmetauscher (152) umfasst, der imstande ist, den verdichteten gasförmigen Kopfstrom (88), der aus der zweiten Kolonne (30) kommt, und das verflüssigte natürliche Bodengas (74), das aus der ersten Kolonne (26) kommt, in eine wärmeaustauschende Beziehung zu bringen, wobei der dritte Wärmetauscher vorteilhafterweise ein Zweifluss-Wärmetauscher ist.

## Claims

1. Method of processing a dried and decarbonated feed natural gas (12) in order to obtain a processed natural gas (14) intended to be liquefied and a cut (16) of C₅⁺ hydrocarbons, the method comprising the following steps:
- cooling of the feed natural gas (12) in a first heat exchanger (20) to form a pre-cooled feed flow (54);
- introduction of the pre-cooled feed flow (54) into a first separator flask (22) to form a pre-cooled gaseous flow (56) and optionally a pre-cooled liquid flow (58);
- dynamic expansion of the pre-cooled gaseous flow (56) in an expansion turbine (24) and introduction of the expanded flow (60) issuing from the expansion turbine (24) into a first purification column (26);
- optionally, expansion of the pre-cooled liquid flow (58) and introduction into the first column (26);
- production at the head of the first column (26) of a purified head natural gas (70);
- recovery at the bottom of the first column (26) of a liquefied bottom natural gas (74);
- introduction of the liquefied bottom natural gas (74) into a second column for elimination of the C₅⁺ hydrocarbons;
- production, at the bottom of the second column (30), of a cut (16) of hydrocarbons;
- production, at the head of the second column (30), of a gaseous column head flow (86) and introduction of the gaseous column head flow (86) into a second separator flask (40) to form a liquid bottom flux (100) and a gaseous head flux (90);
- introduction of a first part (102) of the liquid bottom flux (100) in reflux into the second column (30) and introduction of a second part (104) of the liquid bottom flux (100) in reflux into the first column (26);
- injection of at least a part of the gaseous head flux (90) issuing from the second separator flask (40) into the purified head natural gas (70) to form the processed natural gas (14),
the method comprising the following steps:
* heating the purified head natural gas (70) issuing from the first column (26) in the first heat exchanger (20) by heat exchange with the feed natural gas (12);
* expansion of the liquefied bottom natural gas (74) issuing from the first column before its introduction into the second column (30);
* compression of the gaseous column head flow (86) in a first compressor (38) and cooling before its introduction into the second separator flask (40),
**characterized in that** the hydrocarbon cut (16) is a cut of C₅⁺ hydrocarbons; **in that** during the step of dynamic expansion, the pre-cooled gaseous flow (56) is expanded to a pressure of more than 35 bar, advantageously more than 40 bar, and more advantageously more than 44 bar, **in that** the pressure prevailing in the second column (30) is below 25 bar, advantageously below 20 bar, and more advantageously below 15 bar, and **in that** it comprises bringing the second part (104) of the liquid bottom flux (100) into a heat exchange relationship in a second heat exchanger (28) with the liquefied bottom natural gas (74) issuing from the first column (26),

2. Method according to any one of the preceding claims, **characterized in that** the temperature of the pre-cooled gaseous flow (56), after passing through the expansion turbine (24), is higher than the tapping-off temperature of the purified head natural gas (70) at the head of the first column (26).

3. Method according to any one of the preceding claims, **characterized in that** the second heat exchanger contains only two fluxes.

4. Method according to any one of the preceding claims, **characterized in that** it comprises the tapping-off of a fraction (132) of the gaseous head flux (90) issuing from the second separator flask (40) and the introduction of the tapped-off fraction (132) into the second part (104) of the liquid bottom flux (100) issuing from the second separator flask (40).

5. Method according to any one of the preceding claims, **characterized in that** the gaseous column head flow (86) issuing from the second column (30) is brought into a heat exchange relationship, after its compression in the first compressor (38), with the liquefied bottom natural gas (74) issuing from the first column (26) in a third heat exchanger (52), the third heat exchanger advantageously containing only two fluxes.

6. Method according to any one of the preceding claims, **characterized in that** it comprises a step of tapping-off a secondary flux (112) in the second part (104) of the liquid bottom flux (100), before its introduction into the first column (26), and the introduction of the secondary flux (112) into the flow of purified head natural gas issuing from the first column (26).

7. Method according to any one of the preceding claims, **characterized in that** the whole of the pre-cooled gaseous flow (56) issuing from the first separator flask (22) is introduced into the dynamic expansion turbine (24).

8. Method according to any one of the preceding claims, **characterized in that** the number of theoretical stages of the first column (26) is less than 4.

9. Method according to any one of the preceding claims, **characterized in that** the feed natural gas (12) is cooled exclusively by heat exchange with the purified head natural gas (70) issuing from the first column (26) without the addition of frigories from an external cooling cycle.

10. Method according to any one of the preceding claims, **characterized in that** the steam pressure of the flow of C₅⁺ hydrocarbons is below 1 bar, advantageously 0.8 bar or less.

11. Method according to any one of the preceding claims, **characterized in that** the first heat exchanger contains only two fluxes.

12. Installation (10; 130; 150) for processing a dried and decarbonated feed natural gas (12) in order to obtain a processed natural gas (14) intended to be liquefied and a cut of C₅⁺ hydrocarbons, the installation being of the type comprising:
- means for cooling the feed natural gas (12) to form a pre-cooled feed flow (54), comprising a first heat exchanger (20);
- a first separator flask (22) for forming a pre-cooled gaseous flow (56) and optionally a pre-cooled liquid flow (58);
- means for introducing the pre-cooled feed flow (54) into the first separator flask (22);
- a turbine for dynamic expansion of the pre-cooled gaseous flow (56);
- a first purification column (26);
- means for introducing the expanded flow (60) issuing from the expansion turbine (24) into the first column (26);
- optionally, means for expansion and introduction into the first column (24) of the pre-cooled liquid flow (58);
- means for recovery at the head of the first column (26) of a purified head natural gas (70);
- means for recovery at the bottom of the first column (26) of a liquefied bottom natural gas (74);
- a second column (30) for elimination of the C₅⁺ hydrocarbons;
- means for introducing the liquefied bottom natural gas (74) into the second column (30);
- means for recovery at the bottom of the second column (30) of a cut (16) of hydrocarbons;
- means for recovery at the head of the second column (30) of a gaseous column head flow (86);
- a second separator flask (40);
- means for introducing the gaseous column head flow (86) into the second separator flask (40) to form a liquid bottom flux (100) and a gaseous head flux (90);
- means for introducing a first part (102) of the liquid bottom flux (100) in reflux into the second column (30) and means for introducing a second part (104) of the liquid bottom flux (100) in reflux into the first column (26);
- means for injecting at least a part of the gaseous head flux (90) issuing from the second separator flask (40) into the purified head natural gas (70) to form the processed natural gas flow (14);
the installation comprising:
* means for introducing the purified head natural gas (70) issuing from the first column (26) into the first heat exchanger (20) to heat the purified head natural gas issuing from the first column (26) in the first heat exchanger (20) by heat exchange with the feed natural gas (12);
* means (76) for expansion of the liquefied bottom natural gas (74) issuing from the first column (26) before its introduction into the second column (30);
* means for compressing the gaseous column head flow (86) before its introduction into the second separator flask (40), comprising a first compressor (38),
**characterized in that** the hydrocarbon cut is a cut of C₅⁺ hydrocarbons, **in that** the turbine for dynamic expansion of the pre-cooled gaseous flow is able to expand the pre-cooled gaseous flow (56) to a pressure of more than 35 bars, advantageously more than 40 bars and more advantageously more than 44 bars, **in that** the pressure prevailing in the second column (30) is below 25 bars, advantageously below 20 bars, and more advantageously below 15 bars, and **in that** it comprises a second heat exchanger (28) suitable for bringing the liquefied bottom natural gas (74) issuing from the first column into a heat exchange relationship with the second part (104) of the bottom liquid flux (100) issuing from the second separator flask (40)

13. Installation (10; 130; 150) according to claim 12, **characterized in that** the second heat exchanger contains only two fluxes.

14. Installation (130; 150) according to claim 12 or claim 13, **characterized in that** it comprises means for tapping-off at least a part of the gaseous head flux (90) issuing from the second separator flask (40) in order to introduce it in a mixture in the second part (104) of the liquid bottom flux (90) issuing from the second separator flask (40).

15. Installation (150) according to any one of claims 12 to 14, **characterized in that** it comprises a third heat exchanger (152) suitable for bringing into a heat exchange relationship the compressed gaseous head flow (88) issuing from the second column (30) and the liquefied bottom natural gas (74) issuing from the first column (26), the third heat exchanger advantageously containing only two fluxes.
